(19) Europäisches Patentamt
European Patent Office
Office européen des brevets

(11) **EP 2 602 549 A1**

(12) **EUROPÄISCHE PATENTANMELDUNG**

(43) Veröffentlichungstag:
**12.06.2013 Patentblatt 2013/24**

(51) Int Cl.:
*F23R 3/28* [(2006.01)]     *F23R 3/34* [(2006.01)]

(21) Anmeldenummer: **11192767.9**

(22) Anmeldetag: **09.12.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Beck, Christian, Dr.**
  **45468 Mülheim (DE)**
• **Deiss, Olga**
  **40627 Düsseldorf (DE)**
• **Krebs, Werner, Dr.**
  **45481 Mülheim an der Ruhr (DE)**
• **Wegner, Bernhard, Dr.**
  **45468 Mülheim (DE)**

(54) **Brennkammer für eine Gasturbine und Gasturbine sowie Verfahren**

(57)     Die Erfindung betrifft eine Brennkammer (10,20) für eine Gasturbine (1), mit einem Gehäuse (12, 23), einer von dem Gehäuse (12, 23) umgebenden Verbrennungszone (21, 22, 47), und mindestens einer Brenneranordnung (11, 25), wobei die Brenneranordnung (11,25) mindestens eine in die Verbrennungszone (21,22) mündende Vormischpassage (28) zur Bereitstellung eines Brennstoff/Luft-Gemisches umfasst.

Die Erfindung ermöglicht es, eine Brennkammer einer Gasturbine anzugeben, mit welcher die Unterdrückung von Brennkammerdruckschwankungen ermöglicht wird und die einen besonders einfachen Aufbau und damit geringe Herstellungskosten aufweist.

Hierzu umfasst die Brennkammer mindestens einen anströmbaren Störkörper (50), dem eine Strouhal-Zahl zuordnenbar ist zur Erzeugung fluidisch induzierter Schallwellen, wobei der Störkörper (50) in einer in die Verbrennungszone (21, 22, 47) einmündenden Passage (48,59) angeordnet ist, die Passage (48, 59) von einem in Richtung Verbrennungszone strömenden Fluid (51, 62) durchströmbar ist, und mittels eines Anströmen des Störkörpers (50) eine Schallwelle einer Frequenz f erzeugbar ist, welche im Wesentlichen der Frequenz einer zu unterdrückenden Brennkammerdruckschwankung entspricht.

FIG 3

EP 2 602 549 A1

**Beschreibung**

Die Erfindung bezieht sich auf eine Brennkammer für eine Gasturbine, mit einem Gehäuse, einer von dem Gehäuse umgebenden Verbrennungszone, und mindestens einer Brenneranordnung, wobei die Brenneranordnung mindestens eine in die Verbrennungszone mündende Vormischpassage zur Bereitstellung eines Brennstoff/Luft-Gemisches umfasst.

Die Erfindung bezieht sich auch auf eine Gasturbine mit einer Brennkammer der eingangs genannten Art und auf ein Verfahren zur Unterdrückung von Brennkammerdruckschwankungen.

Bekannte Gasturbinen umfassen neben einer eingangs genannten Brennkammer einen Verdichter und eine Turbine. Der Verdichter verdichtet der Gasturbine zugeführte Luft, wobei ein Teil dieser Luft der Verbrennung von Brennstoff in der Brennkammer dient und ein Teil zur Kühlung der Gasturbine und/oder der Verbrennungsgase verwendet wird. Die durch den Verbrennungsvorgang in der Brennkammer bereitgestellten heißen Gase werden aus der Brennkammer in die Turbine eingeleitet, wobei sie in dieser entspannen und abkühlen und hierbei unter Leistung von Arbeit Turbinenschaufeln in Rotation versetzen. Mittels dieser Rotationsenergie treibt die Gasturbine eine Arbeitsmaschine an. Bei der Arbeitsmaschine kann es sich beispielsweise um einen Generator handeln.

Das durch die mindestens eine Brenneranordnung bereitgestellte Brennstoff/Luft-Gemisch wird in Vormischpassagen vorgemischt, um dann nach dem Einströmen in die Verbrennungszone gezündet zu werden. Die Vormischung des Brennstoffs mit der Luft reduziert die bei der Verbrennung entstehenden Schadstoffemissionen. Der Brennstoff wird der Vormischpassage über mindestens eine Brennstoffleitung zugeführt und in die Vormischpassage eingedüst. Kommt es zu Druckschwankungen in der Verbrennungszone, entstehen Konzentrationsschwankungen in dem Gemisch, welche bei der Verbrennung zu Wärmefreisetzungsfluktuationen führen. Diese thermoakustischen Instabilitäten bilden störende Brennkammerdruckschwankungen aus, wobei es in der Anordnung Vorzugsfrequenzen für diese Brennkammerdruckschwankungen gibt. Aus diesem Grund umfassen bekannte Gasturbinen im Gehäuse angeordnete Resonatoren, die der Unterdrückung von Brennkammerdruckschwankungen im Bereich solcher Vorzugsfrequenzen dienen. Zur effektiven Unterdrückung wird eine Vielzahl an derartigen Resonatoren benötigt. Da die Resonatoren unmittelbar an die Verbrennungszone angrenzen und zudem eine Hitzeschildanordnung in dem Gehäuse unterbrechen und deshalb gekühlt werden müssen, ist eine derartige Ausbildung der Brennkammer aufwendig.

Aufgabe der vorliegenden Erfindung ist es, eine Brennkammer der eingangs genannten Art und eine Gasturbine mit einer solchen Brennkammer sowie ein Verfahren anzugeben, mit welcher die Unterdrückung von Brennkammerdruckschwankungen ermöglicht wird und die einen besonders einfachen Aufbau und damit geringe Herstellungskosten aufweist.

Die Aufgabe wird erfindungsgemäß bei einer Brennkammer der eingangs genanten Art dadurch gelöst, dass die Brennkammer mindestens einen anströmbaren Störkörper umfasst, dem eine Strouhal-Zahl zuordnenbar ist zur Erzeugung fluidisch induzierter Schallwellen, wobei der Störkörper in einer in die Verbrennungszone einmündenden Passage angeordnet ist, die Passage von einem in Richtung Verbrennungszone strömenden Fluids durchströmbar ist, und mittels eines Anströmen des Störkörpers eine Schallwelle einer Frequenz erzeugbar ist, welche im Wesentlichen der Frequenz einer zu unterdrückenden Brennkammerdruckschwankung entspricht.

Die mittels des Störkörpers erzeugte Schallwelle wird der zu unterdrückenden Brennkammerdruckschwankung überlagert und kann eine Phasenlage aufweisen, die zu einer Auslöschung bzw. Dissipation der Brennkammerdruckschwankung führt. Die Phasenlage zwischen der mittels des Störkörpers erzeugten Schallwelle und der Brennkammerdruckschwankung muss hierbei nicht exakt einem Wert entsprechen, sondern kann derart gewählt werden, dass eine gewünschte Unterdrückung der Brennkammerdruckschwankung erreicht wird. Die Phasenlage der Schallwelle lässt sich beispielsweise mittels der Länge der Passage einstellen. Vorzugweise ist die Frequenz der Schallwelle derart gewählt, dass sie im Wesentlichen einer Vorzugsfrequenz der Brennkammer entspricht. Hierzu sind u. a. die Passage und der Störkörper derart gewählt, dass die gewünschte Frequenz der Schallwelle erzeugt wird. Die dem Störkörper zugeordnete Strouhal-Zahl ist eine in der Strömungsmechanik verwendete dimensionslose Kennzahl. Die Strouhal-Zahl ist beispielsweise das Verhältnis aus dem Produkt aus Wirbelablösefrequenz, einer Größe des umströmten Hindernisses und der Anströmgeschwindigkeit des Fluids. Beispielsweise kann als Größe des umströmten Hindernisses eine Länge eines Passagenabschnitts von einem Lufteintritt bis zu dem Störungskörper betrachtet werden. Die Form des Störungskörpers und die Länge des Passagenabschnitts kann hierbei so gewählt werden, dass eine Strouhal-Zahl gegeben ist, dass bei gegebener Anströmgeschwindigkeit des in der Passage strömenden Fluids eine Wirbelablösefrequenz festlegt ist, die der gewünschten Frequenz der zu unterdrückenden Vorzugs-Brennkammerdruckschwankung entspricht. Bei einer entsprechend starken Strömung in der Passage kann eine effektive Unterdrückung der Brennkammerdruckschwankung bereits mit einem einzigen Störkörper gemäß der vorliegenden Erfindung bewirkt werden. Auf eine Anordnung einer Vielzahl an Resonatoren am Gehäuse der Brennkammer gemäß dem Stand der Technik kann verzichtet werden. Die erfindungsgemäße Brennkammer weist somit einen besonders einfachen Aufbau auf, wodurch die Herstellungskosten gesenkt werden können.

Vorteilhafte Ausgestaltungen der Erfindung sind in der nachfolgenden Beschreibung und den Unteransprüchen angegeben. Gemäß einer vorteilhaften Weiterbildung der Erfindung kann vorgesehen sein, dass zwischen der dem Störkörper zugeordneten Strouhal-Zahl Str, einer mittels des Anströmen des Störkörpers erzeugbaren Schallwelle der Frequenz f, einer Strömungsgeschwindigkeit v des in der Passage strömenden Fluids und einer Länge a im Wesentlichen der folgende Zusammenhang gilt:

$$Str = f * a / v$$

Vorteilhafter Weise kann vorgesehen sein, dass die Länge a die Länge eines in Strömungsrichtung vor dem Störkörper sich erstreckenden Passagenabschnitts ist.

Gemäß einer vorteilhaften Ausgestaltung der Erfindung erstreckt sich der Passagenabschnitt von einer Lufteintrittsöffnung bis zum Störkörper.

Die Passage kann beispielsweise schlauchförmig ausgebildet sein und an einer Stirnseite eine Lufteintrittsöffnung aufweisen und an der andern Stirnseite in die Verbrennungszone einmünden.

Vorteilhafter Weise kann weiter vorgesehen sein, dass die Lufteintrittsöffnung kreisförmig oder rechteckig ist.

Die Lufteintrittsöffnung und der Störkörper können fluchtend oder versetzt angeordnet sein. Der Störkörper besitzt vorzugsweise eine Prismenform mit dreieckiger Grundfläche. Die Spitze des Dreiecks bildet hierbei eine in Richtung der Lufteintrittsöffnung anströmbare Kante.

Alternativ kann als Länge a auch die Größe des zu umströmenden Hindernisses gewählt werden.

Gemäß einer vorteilhaften Weiterbildung der Erfindung ist die Passage eine Vormischpassage der Brenneranordnung.

Da die erfindungsgemäße Brennkammer ohnehin wenigstens eine Brenneranordnung mit wenigstens einer Vormischpassage umfasst, kann durch Anordnung des Störkörpers in diese auf besonders einfache und kostengünstige Art die Unterdrückung einer Brennkammerdruckschwankung ermöglicht werden. Bei der Brenneranordnung kann es sich beispielsweise um einen Pilotbrenner und eine um den Pilotbrenner herum angeordnete Gruppe von Hauptbrennern handeln. Ein Ausführungsbeispiel der Weiterbildung kann vorsehen, dass der Pilotbrenner und die Hauptbrenner jeder ein zylinderförmiges Brennergehäuse und eine in diesem zentral angeordnete Lanze umfassen, welche über Drallschaufeln an dem Gehäuse abgestützt ist. Die Lanze ist mit einem Brennstoffkanal verbunden und weist an ihrem zur Verbrennungszone hinweisenden Ende Brennstoffdüsen auf zur Eindüsung von Brennstoff in das zylinderförmige Brennergehäuse. Das zylinderförmige Brennergehäuse wird von verdichteter Luft durchströmt, welcher in den Drallschaufeln ein Drall aufgeprägt wird, wobei der in die Luftströmung eingedüste Brennstoff in dem zylinderförmigen Brennergehäuse mit dieser vermischt wird und als Brennstoff/Luft-Gemisch das Gehäuse in Richtung Verbrennungszone verlässt. Im Rahmen dieser Erfindung kann ein derartiges Brennergehäuse beispielsweise als Vormischpassage der Brenneranordnung bezeichnet werden. Gemäß der Weiterbildung der Erfindung kann in wenigstens einem der Brennergehäuse ein Störkörper angeordnet sein zur Erzeugung von Schallwellen.

Es kann auch als vorteilhaft betrachtet werden, dass die Brennkammer mindestens eine zweite axiale Stufe aufweist, so dass die Verbrennungszone in mindestens eine erste und eine zweite Verbrennungszone unterteilt ist und die zweite Verbrennungszone in einer Hauptströmungsrichtung unmittelbar hinter der ersten Verbrennungszone angeordnet ist, eine erste Brenneranordnung zur Verbrennung eines ersten in der ersten Verbrennungszone zu zündenden Arbeitsgasstromes ausgebildet ist, eine zweite Brenneranordnung zur Verbrennung eines in der zweiten Verbrennungszone zu zündenden zweiten Arbeitsgasstroms ausgebildet ist, und die Passage eine von der zweiten Brenneranordnung umfasste Vormischpassage ist.

Für gewöhnlich ist die Brenneranordnung der zweiten axialen Stufe um das Gehäuse der Brennkammer herum angeordnet und umfasst Einleitpassagen, die in das Innere des Gehäuses münden. Über die Einleitpassagen wird ein Brennstoff/Luft-Gemisch in das Innere des Gehäuses in die zweite Verbrennungszone eingeleitet. Diese Einleitpassagen können in ihrer Länge auf einfache Weise angepasst werden, so dass es besonders vorteilhaft ist, in zumindest einer dieser Einleitpassagen einen Störkörper entsprechend der Erfindung anzuordnen.

Gemäß einer vorteilhaften Ausgestaltung der Erfindung kann der Störkörper im Wesentlichen die Form eines geraden Prismas mit dreieckiger Grundfläche haben.

Ein Störkörper dieser Form ist besonders einfach herzustellen.

Eine weitere Aufgabe der Erfindung ist es, eine Gasturbine mit einer Brennkammer der eingangs genannten Art anzugeben, welche einen besonders einfachen Aufbau und damit geringe Herstellungskosten aufweist.

Die Aufgabe wird erfindungsgemäß bei einer Gasturbine der eingangs genannten Art dadurch gelöst, dass die Brennkammer nach wenigstens einem der Ansprüche 1 bis 8 ausgebildet ist.

Eine weitere Aufgabe der Erfindung ist es, ein Verfahren zur Unterdrückung von Brennkammerdruckschwankungen anzugeben, welches mit einem besonders einfachen Aufbau und damit geringen Herstellungskosten realisiert werden kann.

Die Aufgabe wird erfindungsgemäß bei einem Verfahren der eingangs genannten Art dadurch gelöst, dass mindestens eine Schallwelle mit einer Frequenz erzeugt wird, die im Wesentlichen der Frequenz einer zu unterdrückenden Brennkammerdruckschwankung entspricht, die Schallwelle der zu unterdrückenden Brennkammerdruckschwankung gegenphasig überlagert wird, wobei die Schallwelle durch Anströmen mindestens eines Störkörpers erzeugt wird, indem ein Verhältnis zwischen einer Strouhal-Zahl STR des Störkörpers, einer Anströmgeschwindigkeit v eines den Störkörper anströmenden Fluids und einer Länge a entsprechend der zu erzeugenden Frequenz f gewählt wird.

Hierbei kann vorteilhafter Weise das Verhältnis durch die Gleichung STR = f * a / v bestimmt werden.

Eine vorteilhafte Ausgestaltung der Erfindung kann vorsehen, dass als Länge a die Länge eines in Strömungsrichtung vor dem Störkörper sich erstreckenden Passagenabschnitts gewählt wird.

Als Länge a kann auch die Größe des zu umströmenden Hindernisses gewählt werden.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

Dabei zeigt die

FIG 1    eine schematische Schnittansicht einer Gasturbine nach dem Stand der Technik,

FIG 2    einen Ausschnitt einer Brennkammer mit zweiter axialer Stufe gemäß dem Stand der Technik in einer schematischen Schnittansicht,

FIG 3    eine schematische Detailansicht einer erfindungsgemäßen Brennkammer gemäß einem ersten Ausführungsbeispiel im Bereich einer Passage mit Störkörper, und

FIG 4    eine Lufteintrittsbereich einer erfindungsgemäßen Passage mit Störkörper gemäß einem zweiten Ausführungsbeispiel in perspektivischer Ansicht und schematischer Darstellung.

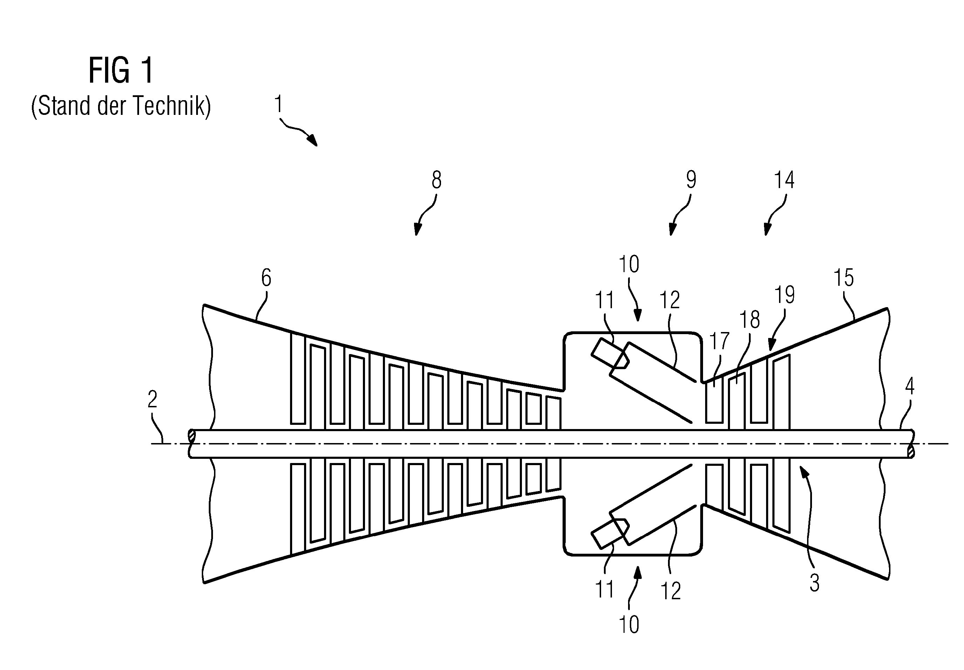

Die Figur 1 zeigt eine schematische Schnittansicht einer Gasturbine 1 nach dem Stand der Technik. Die Gasturbine 1 weist im Inneren einen um eine Rotationsachse 2 drehgelagerten Rotor 3 mit einer Welle 4 auf, der auch als Turbinenläufer bezeichnet wird. Entlang des Rotors 3 folgen aufeinander ein Ansauggehäuse 6, ein Verdichter 8, ein Verbrennungssystem 9 mit einer Anzahl an Brennkammern 10, die jeweils eine Brenneranordnung 11 und ein Gehäuses 12 umfassen, eine Turbine 14 und ein Abgasgehäuse 15.

Das Verbrennungssystem 9 kommuniziert mit einem beispielsweise ringförmigen Heißgaskanal. Dort bilden mehrere hintereinander geschaltete Turbinenstufen die Turbine 14. Jede Turbinenstufe ist aus Schaufelringen gebildet. In Strömungsrichtung eines Arbeitsmediums gesehen folgt im Heißkanal einer aus Leitschaufeln 17 gebildeten Reihe eine aus Laufschaufeln 18 gebildete Reihe. Die Leitschaufeln 17 sind dabei an einem Innengehäuse eines Stators 19 befestigt, wohingegen die Laufschaufeln 18 einer Reihe beispielsweise mittels einer Turbinenscheibe am Rotor 3 angebracht sind. An dem Rotor 3 angekoppelt ist beispielsweise ein Generator (nicht dargestellt).

Während des Betriebes der Gasturbine wird vom Verdichter 8 durch das Ansauggehäuse 6 Luft angesaugt und verdichtet. Die am turbinenseitigen Ende des Verdichters 8 bereitgestellte verdichtete Luft wird zu dem Verbrennungssystem 9 geführt und dort im Bereich der Brenneranordnung 11 mit einem Brennstoff vermischt. Das Gemisch wird dann mit Hilfe der Brenneranordnung 11 unter Bildung eines Arbeitsgasstromes im Verbrennungssystem 9 verbrannt. Von dort strömt der Arbeitsgasstrom entlang des Heißgaskanals an den Leitschaufeln 17 und den Laufschaufeln 18 vorbei. An den Laufschaufeln 18 entspannt sich der Arbeitsgasstrom impulsübertragend, so dass die Laufschaufeln 18 den Rotor 3 antreiben und dieser den an ihn angekoppelten Generator (nicht dargestellt).

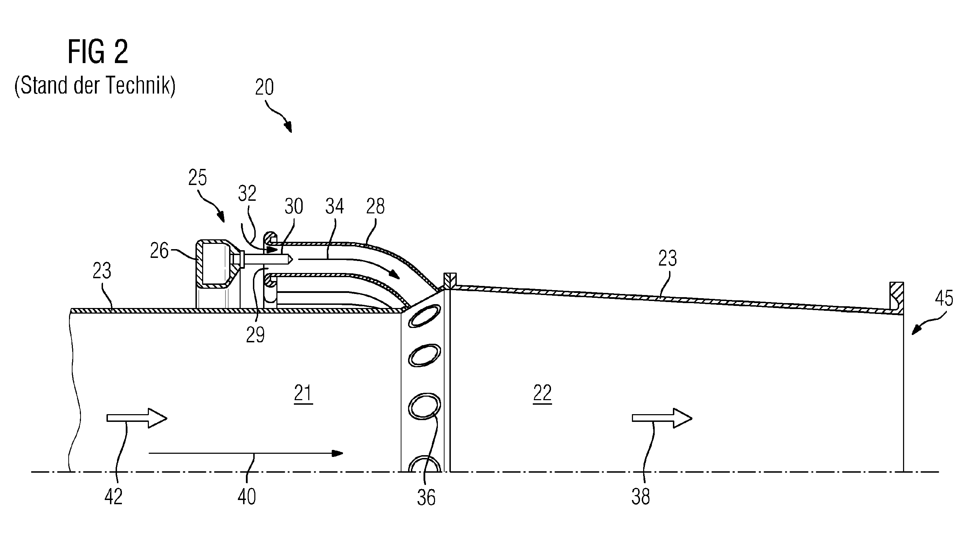

Die Figur 2 zeigt einen Ausschnitt einer Brennkammer 20 mit einer zweiten axialen Stufe gemäß dem Stand der Technik in einer schematischen Schnittansicht. Die Brennkammer 20 umfasst eine erste Verbrennungszone 21 und eine zweite Verbrennungszone 22 mit einem die Verbrennungszonen umgebenden Gehäuse 23, eine erste Brenneranordnung (nicht dargestellt) und eine zweite Brenneranordnung 25. Die zweite Brenneranordnung 25 umfasst einen außerhalb des Gehäuses 23 angeordneten, umlaufenden Brennstoffverteilerring 26 und eine Vielzahl an um das Gehäuse herum angeordneten Vormischpassagen 28, welche in die zweite Verbrennungszone 22 einmünden. Die Vormischpassagen 28 sind schlauchförmig ausgebildet, wobei in eine Lufteintrittsöffnung 29 der Vormischpassagen 28 von dem Brennstoffverteilerring 26 abzweigende Brennstoffdüsen 30 hineinragen. Einem in die Vormischpassage 28 einströmenden Luftstrom 32 wird aus den Brennstoffdüsen 30 eingedüster Brennstoff zugemischt, so dass das Brennstoff/Luft-Gemisch entlang einer Strömungsrichtung 34 zu einem Austritt 36 der Vormischpassage 28 strömt und in die zweite Verbrennungszone 22 eintritt und nach der Zündung des Gemisches einen zweiten Arbeitsgasstrom 38 ausbildet. Kommt es zu Druckschwankungen in den Verbrennungszonen 22,21, entstehen Konzentrationsschwankungen in dem Brennstoff/Luft-Gemisch in der mindestens einen Vormischpassage 28, welche bei der Verbrennung zu Wärmefreisetzungsfluktuationen führen. Diese thermoakustischen Instabilitäten bilden störende Brennkammerdruckschwankungen aus, wobei es in der Brennkammer 20 Vorzugsfrequenzen für diese Brennkammerdruckschwankungen gibt. Diese Brennkammerdruckschwankungen treten sowohl bei Brennkammern mit nur einer axialen Stufe (siehe Figur 1 Pos.10) als auch bei Brennkammern 20 mit zweiter axialer Stufe auf. Die zweite axiale Stufe einer solchen Brennkammer dient der Reduzierung von Schadstoffemissionen. Hierbei wird ein in einer Hauptströmungsrichtung 40 strömender erster heißer Arbeitsgasstrom 42, welcher mittels der ersten Brenneranordnung (nicht dargestellt) in der ersten Verbrennungszone 21 gezündet wurde, in der zweiten Verbrennungszone 22 mit dem zweiten Arbeitsgasstrom 38 vermischt und bildet mit diesem an einem Brennkammerausgang 45 ein gemeinsames Turbineneintrittsprofil aus.

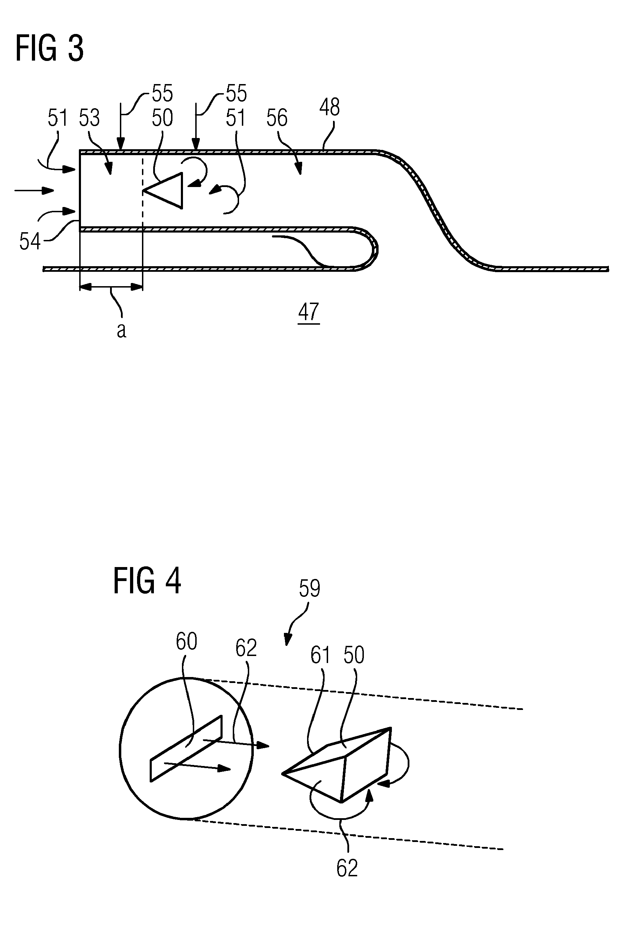

Die Figur 3 zeigt eine in eine Verbrennungszone 47 einer Gasturbinenbrennkammer einmündende Passage 48 mit einem in der Passage 48 angeordneten Störkörper 50 gemäß einem Ausführungsbeispiel der Erfindung. Dem Störkörper 50 ist eine Strouhal-Zahl zuordenbar, wobei er gemäß dem dargestellten Ausführungsbeispiel die Form eines Prismas mit dreieckiger Grundfläche hat. Die Passage 48 wird von einem in Richtung der Verbrennungszone 47 strömenden Fluid 51 durchströmt, wobei das Fluid 51 eine Strömungsgeschwindigkeit v aufweist und den Störkörper 50 anströmt. Hierbei entstehen in dem Fluid 51 Wirbel mit einer Wirbelablösefrequenz f. Mittels des Anströmens des Störkörpers 50 ist somit eine Schallwelle einer Frequenz f in dem zur Verbrennungszone 47 strömenden Fluid 51 erzeugbar, welche einer in der Verbrennungszone 47 zu unterdrückenden Brennkammerdruckschwankung überlagert werden kann. Damit die Frequenz f der erzeugten Schallwelle im Wesentlichen der Frequenz der zu unterdrückenden Brennkammerdruckschwankung entspricht, kann beispielsweise das Verhältnis zwischen der Strouhal-Zahl STR des Störkörpers 50 , einer Länge a und der Strömungsgeschwindigkeit v des Fluids 51 entsprechend der aus der Strömungsmechanik bekannten Formel STR = f * a / v gewählt werden. Als Länge a kann beispielsweise die Länge eines in Strömungsrichtung vor dem Störkörper 50 sich erstreckenden Passagenabschnitts 53 gewählt werden. Dieser erstreckt sich gemäß dem dargestellten Ausführungsbeispiel von der Lufteintrittsöffnung 54 bis zum Störkörper 50. Bei der Passage 48 kann es sich um eine Vormischpassage der Brennkammer handeln. In diesem Fall ist das Fluid 51 ein Luftstrom, in den an den beispielhaft eingezeichneten Stellen Brennstoff 55 eingedüst wird. Die Vormischpassage kann beispielsweise von einer zweiten Brenneranordnung der zweiten axialen Stufe umfasst sein. Die relative Phasenlage der erzeugten Schallwelle und der Brennkammerdruckschwankung lässt sich beispielsweise über eine dem Störkörper 50 stromab nachfolgende Länge eines Passagenabschnitts einstellen - beispielsweise mittels der Länge eines vom Störkörper 50 bis zum Austritt zur Verbrennungszone sich erstreckenden Passagenabschnitts 56. Die Phasenlage wird dabei derart eingestellt, dass sich eine gewünschte Unterdrückung der Brennkammerdruckschwankung ergibt.

Die Figur 4 zeigt einen Lufteintrittsbereich einer erfindungsgemäßen Passage 59 mit in der Passage 59 angeordnetem Störkörper 50. Eine rechteckige Lufteintrittsöffnung 60 befindet sich stromauf des Störkörpers 50, der die Form eines Prismas mit dreieckiger Grundfläche aufweist. Die Lufteintrittsöffnung 60 und der Störkörper 50 sind fluchtend zueinander angeordnet, wobei die Spitze des Dreiecks eine in Richtung der Lufteintrittsöffnung 60 anströmbare Kante 61 bildet. Ein durch die Lufteintrittsöffnung strömendes Fluid 62 strömt den Störkörper 50 - dem eine Strouhal-Zahl zuordenbar ist - an, wobei durch Wirbelablösung eine Schallwelle einer Frequenz f in Strömungsrichtung hinter dem Störkörper 50 entsteht.

**Patentansprüche**

1. Brennkammer (10,20) für eine Gasturbine (1), mit

   - einem Gehäuse (12, 23),
   - einer von dem Gehäuse (12, 23) umgebenden Verbrennungszone (21, 22, 47), und
   - mindestens einer Brenneranordnung (11, 25),

      - wobei die Brenneranordnung (11,25) mindestens eine in die Verbrennungszone (21,22) mündende Vormischpassage (28) zur Bereitstellung eines Brennstoff/Luft-Gemisches umfasst,

   - und mindestens einem anströmbaren Störkörper (50), dem eine Strouhal-Zahl zuordnenbar ist zur Erzeugung fluidisch induzierter Schallwellen,
   - wobei der Störkörper (50) in einer in die Verbrennungszone (21, 22, 47) einmündenden Passage (48,59) angeordnet ist,
   - die Passage (48, 59) von einem in Richtung Verbrennungszone strömenden Fluids (51, 62) durchströmbar ist, und
   - mittels eines Anströmen des Störkörpers (50) eine Schallwelle einer Frequenz f erzeugbar ist, welche im Wesentlichen der Frequenz einer zu unterdrückenden Brennkammerdruckschwankung entspricht.

2. Brennkammer (10, 20) für eine Gasturbine (1) nach Anspruch 1,
   **dadurch gekennzeichnet, dass** zwischen der dem Störkörper (50) zugeordneten Strouhal-Zahl Str, einer mittels des Anströmen des Störkörpers (50) erzeugbaren Schallwelle der Frequenz f, einer Strömungsgeschwindigkeit v des in der Passage strömenden Fluids und einer Länge a im Wesentlichen der folgende Zusammenhang gilt:

$$Str = f * a / v$$

3. Brennkammer für eine Gasturbine nach Anspruch 2, **dadurch gekennzeichnet, dass** die Länge a die Länge eines in Strömungsrichtung vor dem Störkörper sich erstreckenden Passagenabschnitts (53) ist.

4. Brennkammer für eine Gasturbine nach Anspruch 3, **dadurch gekennzeichnet, dass** sich der Passagenabschnitt (53) von einer Lufteintrittsöffnung (54,60) bis zum Störkörper (50) erstreckt.

5. Brennkammer für eine Gasturbine nach Anspruch 4, **dadurch gekennzeichnet, dass** die Lufteintrittsöffnung (60) kreisförmig oder rechteckig ist.

6. Brennkammer für eine Gasturbine nach einem der vorangehenden Ansprüche, **dadurch gekennzeichnet, dass** die Passage (48, 59) eine Vormischpassage (28) der Brenneranordnung (25, 11) ist.

7. Brennkammer für eine Gasturbine nach Anspruch 6, **dadurch gekennzeichnet, dass**

   - die Brennkammer (20) mindestens eine zweite axiale Stufe aufweist, so dass die Verbrennungszone in mindestens eine erste (21) und eine zweite Verbrennungszone (22) unterteilt ist und die zweite Verbrennungszone (22) in einer Hauptströmungsrichtung (40) hinter der ersten Verbrennungszone (21) angeordnet ist,
   - eine erste Brenneranordnung (11) zur Verbrennung eines ersten in der ersten Verbrennungszone (21) zu zündenden Arbeitsgasstromes (42) ausgebildet ist,
   - eine zweite Brenneranordnung (25) zur Verbrennung eines in der zweiten Verbrennungszone (22) zu zündenden zweiten Arbeitsgasstroms (38) ausgebildet ist,
   - und die Passage (48, 59) eine von der zweiten Brenneranordnung (25) umfasste Vormischpassage (28) ist.

8. Brennkammer für eine Gasturbine nach einem der vorangehenden Ansprüche, **dadurch gekennzeichnet, dass** der Störkörper (50) im Wesentlichen die Form eines geraden Prismas mit dreieckiger Grundfläche hat.

9. Gasturbine (1) mit einer Brennkammer (10,20), **dadurch gekennzeichnet, dass** die Brennkammer nach einem der Ansprüche 1 bis 8 ausgebildet ist.

10. Verfahren zur Unterdrückung von Brennkammerdruckschwankungen, bei welchem

    - mindestens eine Schallwelle mit einer Frequenz f erzeugt wird, die im Wesentlichen der Frequenz einer zu unterdrückenden Brennkammerdruckschwankung entspricht,
    - die Schallwelle der zu unterdrückenden Brennkammerdruckschwankung gegenphasig überlagert wird, wobei
    - die Schallwelle durch Anströmen mindestens eines Störkörpers (50) erzeugt wird, indem ein Verhältnis zwischen einer Strouhal-Zahl STR des Störkörpers, einer Anströmgeschwindigkeit v eines den Störkörper anströmenden Fluids und einer Länge a entsprechend der zu erzeugenden Frequenz f gewählt wird.

11. Verfahren nach Anspruch 10, **dadurch gekennzeichnet, dass** das Verhältnis durch die Gleichung $STR = f * a / v$ bestimmt wird.

12. Verfahren nach Anspruch 10 oder 11, **dadurch gekennzeichnet, dass** die Länge a die Länge eines in Strömungsrichtung vor dem Störkörper (50) sich erstreckenden Passagenabschnitts (53) ist.

## FIG 1
(Stand der Technik)

FIG 2

(Stand der Technik)

FIG 3

FIG 4

Europäisches
Patentamt

European
Patent Office

Office européen
des brevets

## EUROPÄISCHER RECHERCHENBERICHT

**Nummer der Anmeldung**

EP 11 19 2767

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 487 274 A (GULATI ANIL [US] ET AL) 30. Januar 1996 (1996-01-30) * Spalte 2, Zeile 33 - Spalte 4, Zeile 31; Abbildungen 1-7 * ----- | 1-6,8-12 | INV. F23R3/28 F23R3/34 |
| X | JP 7 091661 A (HITACHI LTD) 4. April 1995 (1995-04-04) * Zusammenfassung; Abbildungen 1,2 * ----- | 1-4,6, 9-12 | |
| X | US 6 070 411 A (IWAI YASUNORI [JP] ET AL) 6. Juni 2000 (2000-06-06) * Spalte 8, Zeile 1 - Spalte 10, Zeile 38; Abbildungen 1,2 * ----- | 2-7,9-12 | |
| X | US 5 829 967 A (CHYOU YAU-PIN [TW]) 3. November 1998 (1998-11-03) * Zusammenfassung; Abbildung 1 * ----- | 2-7,9-12 | |

RECHERCHIERTE
SACHGEBIETE (IPC)

F23R

Der vorliegende Recherchenbericht wurde für alle Patentansprüche erstellt

| Recherchenort | Abschlußdatum der Recherche | Prüfer |
|---|---|---|
| München | 31. Januar 2012 | Theis, Gilbert |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
  Dokument

EPO FORM 1503 03.82 (P04C03)

**EP 2 602 549 A1**

**ANHANG ZUM EUROPÄISCHEN RECHERCHENBERICHT
ÜBER DIE EUROPÄISCHE PATENTANMELDUNG NR.**

EP 11 19 2767

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-01-2012

| Im Recherchenbericht angeführtes Patentdokument | Datum der Veröffentlichung | Mitglied(er) der Patentfamilie | Datum der Veröffentlichung |
|---|---|---|---|
| US 5487274 A | 30-01-1996 | KEINE | |
| JP 7091661 A | 04-04-1995 | JP 3503172 B2<br>JP 7091661 A | 02-03-2004<br>04-04-1995 |
| US 6070411 A | 06-06-2000 | CN 1184918 A<br>DE 69719688 D1<br>DE 69719688 T2<br>EP 0845634 A2<br>JP 3619626 B2<br>JP 10160164 A<br>US 6070411 A | 17-06-1998<br>17-04-2003<br>12-02-2004<br>03-06-1998<br>09-02-2005<br>19-06-1998<br>06-06-2000 |
| US 5829967 A | 03-11-1998 | CN 1142036 A<br>DE 19510744 A1<br>EP 0733861 A2<br>JP 8270948 A<br>US 5829967 A | 05-02-1997<br>26-09-1996<br>25-09-1996<br>18-10-1996<br>03-11-1998 |

EPO FORM P0461

Für nähere Einzelheiten zu diesem Anhang : siehe Amtsblatt des Europäischen Patentamts, Nr.12/82